# EUROPÄISCHE PATENTSCHRIFT

(11) **EP 1 805 427 B1**
(45) Veröffentlichungstag und Bekanntmachung des Hinweises auf die Patenterteilung: **08.09.2010**
(21) Anmeldenummer: 05796214.4
(22) Anmeldetag: 19.10.2005
(51) Int. Cl.: F16C 7/06, F16B 7/14

(54) **ZUG-DRUCK-STANGE**
TRACTION-PRESSURE ROD
BARRE DE TRACTION-COMPRESSION

(30) Priorität: 20.10.2004 DE 202004016321 U
(43) Veröffentlichungstag der Anmeldung: 11.07.2007
(73) Patentinhaber: GMT Gummi-Metall-Technik GmbH, 77815 Bühl (DE); Trigum Engineering GmbH, 21218 Sevetal-Hitfeld (DE)
(72) Erfinder: UHL, Albert, 76547 Sinzheim-Kartung (DE); GOMEZ, Francisco, 22214 Rosengarten (DE); KOCH, Soeren, 21423 Winsen (DE)
(74) Vertreter: Miller, Andreas
(86) Internationale Anmeldenummer: PCT/EP2005/011229
(87) Internationale Veröffentlichungsnummer: WO 2006/042750

(56) Entgegenhaltungen:
- EP-A- 0 916 866
- DE-A1- 19 704 053
- DE-B1- 1 933 474
- DE-U1-202004 004 407
- US-A- 781 067
- US-A- 781 067
- US-B1- 6 267 528

## Beschreibung

Die Erfindung betrifft eine Zug-Druck-Stange, insbesondere zur Führung und mechanischen Lagerung im Maschinen-, Flugzeug- und Fahrzeugbau.

Zug-Druck-Stangen dieser Art umfassen im allgemeinen einen zumindest im wesentlichen rohrförmigen Körper, an dessen Enden sich jeweils ein Adapter zur Montage der Zug-Druck-Stange befindet.

Derartige Zug-Druck-Stangen sind im allgemeinen in ihrer Länge verstellbar, um einen Toleranzausgleich bzw. eine Anpassung an einen vorgegebenen Abstand der Montagepunkte vornehmen zu können. Um ein unbeabsichtigtes Verdrehen der Zug-Druck-Stange im eingebauten Zustand zu verhindern, kann schließlich eine entsprechende Verdrehsicherung in Form von Kontermuttern oder äußeren Arretiermechanismen vorgesehen sein.

Der Einbau dieser Zug-Druck-Stangen erfordert mehrere Montageschritte. Mit einem ersten Schritt wird zunächst der erste Adapter an einem ersten Montagepunkt befestigt.

Im zweiten Schritt wird die Einstellung bzw. Anpassung der Länge der Zug-Druck-Stange entsprechend dem Abstand der Montagepunkte für den zweiten Adapter vorgenommen. Zu diesem Zweck benötigt die betreffende Person im allgemeinen beide Hände und / oder ein geeignetes Werkzeug.

Mit einem dritten Schritt wird dann der zweite Adapter an einem zweiten Montagepunkt befestigt.

Anschließend ist mit einem vierten Schritt die Zug-Druck-Stange gegen ein Verdrehen zu sichern. Auch dies kann im allgemeinen nur mit beiden Händen und / oder unter Verwendung von entsprechenden Werkzeugen oder Vorrichtungen vorgenommen werden.

Die Durchführung dieser Montageschritte kann insbesondere bei beengten Platzverhältnissen schwierig und zeitaufwändig sein.

Das Dokument US 781,067 A offenbart eine Zug-Druck-Stange mit einem Körper und einem Adapter zur Montage der Zug-Druck-Stange, wobei der Adapter zur Längenveränderung der Zug-Druck-Stange mit dem Körper durch eine Gewindeanordnung so verbunden ist, dass er im Verhältnis zum Körper drehbar ist, sowie einer mittels einer Verbindungselements mit dem Adapter verbundenen Rasteinrichtung, die die Drehbewegung derart beaufschlagt, dass sie mit einer vorbestimmbaren Verriegelungskraft in einer Mehrzahl von Drehstellungen arretiert und wieder entriegelt werden kann, wobei die Rasteinrichtung aus zwei Rastelementen besteht, von denen das erste Rastelement am Adapter und das zweite Rastelement am Körper angeordnet ist, wobei das erste Rastelement als Teilring mit zwei Rastnasen ausgebildet ist, mit denen es zur Arretierung der Rasteinrichtung in das zweite Rastelement eingreift, das als Zahnkranz ausgebildet ist, womit der Körper und der Adapter in Drehrichtung zueinander arretier- und lösbar verbunden sind.

Der Erfindung liegt daher die Aufgabe zugrunde, eine Zug-Druck-Stange zu schaffen, die eine Verdrehsicherung aufweist und auch unter beengten Platzverhältnissen einfach und schnell montierbar ist.

Erfindungsgemäß erfolgt die Lösung dieser Aufgabe durch eine Zug-Druck-Stange gemäß Anspruch 1.

Ein besonderer Vorteil dieser Lösung besteht darin, dass der oben genannte vierte Montageschritt entfallen und die Montage der Zug-Druck-Stange deshalb einfach und zügig erfolgen kann. Vor allem lassen sich solche Zug-Druck-Stangen, die über entgegengesetzt drehende Gewindeanordnungen für die beiden Adapter verfügen, leicht montieren. Sie werden zunächst mit einem der beiden Adapter an einem vorgesehenen Montagepunkt befestigt. Danach wird durch Verdrehen des Körpers die erforderliche Länge der Zug-Druck-Stange eingestellt. Wenn diese erreicht ist, wird auch der andere Adapter an dem anderen dafür vorgesehenen Montagepunkt befestigt. Sofern erforderlich, kann danach noch eine Feineinstellung der Länge der Zug-Druck-Stange durch weiteres Verdrehen des Körpers erfolgen. Die Rasteinrichtung der vorliegenden Erfindung sorgt dafür, dass es nach jeder Drehung des Körpers zu einer Wiederverriegelung der Zug-Druck-Stange kommt, ohne, dass hierfür zusätzliche Verriegelungsmittel benötigt werden.

Bei dem Körper handelt es sich insbesondere um einen im wesentlichen rohrförmigen Körper, der gegebenenfalls zur Aufnahme zusätzlicher, für die Funktion der Zug-Druck-Stange geeigneter Einrichtungen, wie beispielsweise einer Ausdrehsicherung und dergleichen, verfügen kann.

Gemäß der Erfindung weist die Rasteinrichtung zwei Rastelemente auf, wobei ein erstes Rastelement an dem Adapter und ein zweites Rastelement an dem Körper angeordnet ist. Bei dem ersten Rastelement ist eine Rastnase vorgesehen, mit der es zur Arretierung der Rasteinrichtung in das zweite Rastelement eingreift. Das zweite Rastelement ist hierzu als Zahnkranz ausgebildet, so dass eine Verdrehsicherung in einer Mehrzahl von Drehstellungen des Körpers möglich ist. Je nachdem, wie groß die Verriegelungskraft sein soll, kann das erste Rastelement auch mehrere Rastnasen aufweisen, die alle in eine jeweils andere, hierfür vorgesehene Position in dem zweiten Rastelement eingreifen.

Das erste Rastelement ist mit dem Adapter zumindest in Drehrichtung fest verbunden.

Nach der Erfindung weist das erste Rastelement einen Teilring auf, der den zahnkranz zu drei viertel federnd umfasst und auf diesen eine Kraft ausübt, so dass der Körper und der Adapter in Drehrichtung zueinander arretierbar sind. Der Teilring kann hierbei aus Metall oder Kunststoff bestehen.

Schließlich kann die Zug-Druck-Stange ein Federelement aufweisen, das ein erstes Gewinde gegen ein zweites Gewinde der Gewindeanordnung drückt. Vorzugsweise handelt es sich bei dem Federelement um eine Torsionsfeder, wobei die Torsionsfeder koaxial zur Drehachse des Körpers und um einen Schaft des Adapters angebracht ist. Ein solches Federelement gewährleistet einen guten Geräuschschutz. Da Zug-Druck-Stangen im Betrieb vielfältigen Belastungen unterliegen, kann es mit der Zeit zu einer Vergrößerung des Gewindespiels kommen, wodurch störende Geräusche auftreten können. Solche Geräusche sind vor allem bei Fahrzeugen wie Luft-, Schienen- und Kraftfahrzeugen zu vermeiden.

Die Erfindung wird nachfolgend anhand eines bevorzugten Ausführungsbeispiels näher erläutert. Es zeigt
- Fig. 1 und 2: jeweils eine Zug-Druck-Stange, teilweise im Schnitt,
- Fig. 3: einen Querschnitt durch eine Rasteinrichtung sowie
- Fig. 4: eine Zug-Druck-Stange mit zwei Adaptern.

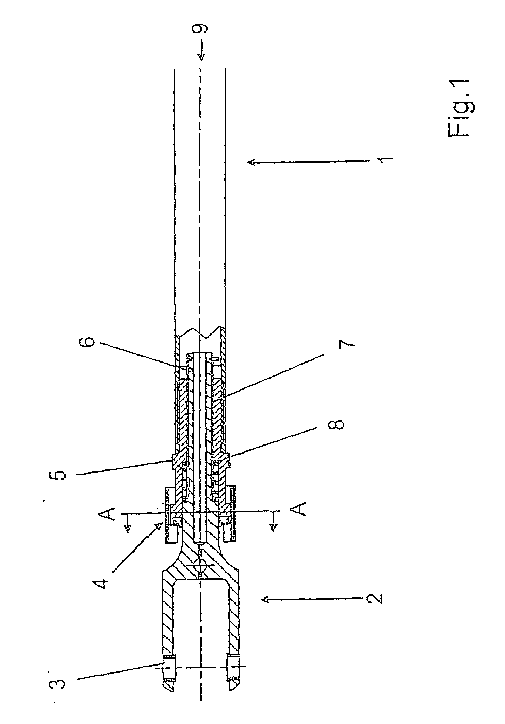

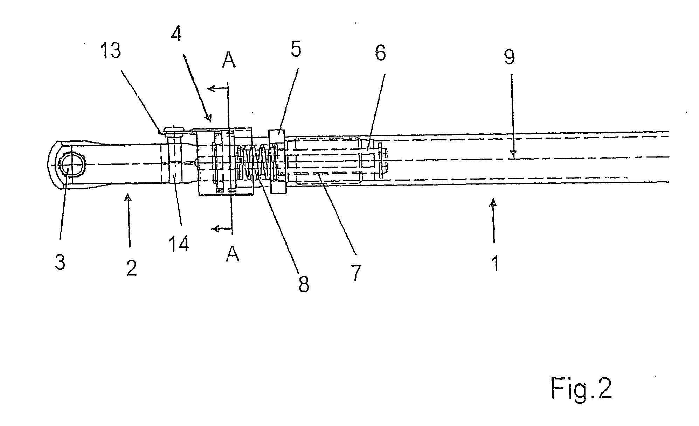

Die Figuren 1 und 2 zeigen ein Ende eines rohrförmigen Körpers 1, an dem ein Adapter 2 angeordnet ist, wobei in Figur 2 die Zug-Druck-Stange gegenüber Figur 1 um 90° gedreht dargestellt ist. Der Körper 1 und der Adapter 2 sind über eine Gewindeanordnung 7 miteinander verbunden. Die Gewindeanordnung 7 weist ein erstes Gewinde an der Innenwand eines mit dem Körpers 1 verbundenen Einsatzelements 5 sowie ein zweites Gewinde am Außenumfang des Schafts 6 des Adapters 2 auf. Das Einsatzelement 5 umgibt den Schaft 6 und nimmt dabei ein Federelement (Torsionsfeder) 8 auf. Das Federelement 8 drückt den Adapter 2 und das Einsatzelement 5 in jeweils entgegengesetzte Richtung, wodurch die Gewindegänge der Gewindeanordnung 7 gegeneinander gepresst werden. Dies hat den Vorteil, dass damit eine Geräuschentwicklung in der Zug-Druck-Stange vermieden wird. Unter Belastung der Zug-Druck-Stange wirken nämlich Kräfte entlang der Drehachse 9, wodurch es im Laufe der Zeit zu einer Vergrößerung des Gewindespiels der Gewindeanordnung 7 kommt .

Eine Bohrung 3 am gabelförmigen Abschnitt des Adapters 2 dient der Montage der Zug-Druck-Stange. Der Adapter 2 ist mittels eines Bolzens 14 und eines Verbindungselements 13 mit der Rasteinrichtung 4 fest verbunden.

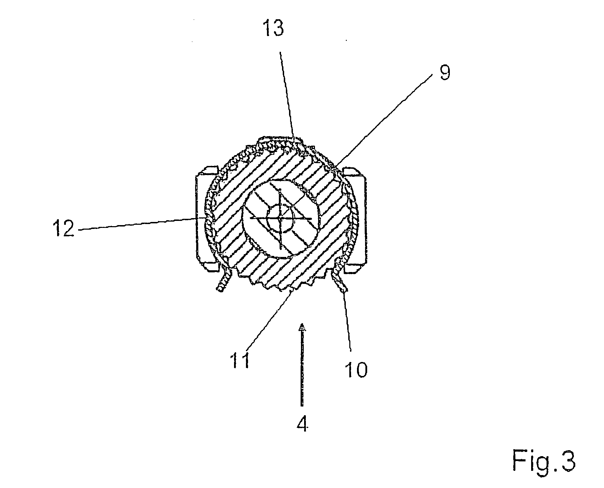

Figur 3 zeigt einen Querschnitt durch die Rasteinrichtung 4 entlang der Linie A-A. Das am Adapter 2 befestigte erste Rastelement 10 ist hier als Federring dargestellt, der das am Körper 1 befestigte zweite Rastelement 11 umgreift. Der Federring weist mindestens eine Rastnase 12 auf, mit der er zur Arretierung der Rasteinrichtung 4 in das zweite Rastelement 11 eingreift. Das zweite Rastelement 11 ist als Zahnkranz ausgebildet, so dass eine Verdrehsicherung in einer Mehrzahl von Drehstellungen des Körpers möglich ist. Solange der Körper 1 nicht gedreht wird, drückt die Rastnase 12 des Federrings in eine Zahnlücke des Zahnkranzes. Die Rasteinrichtung 4 ist dann arretiert. Wird der Körper 1 um die- Drehachse 9 gedreht, erweitert sich der Federring, so dass eine Verdrehung des Körpers 1 relativ zum Adapter 2 möglich ist, bis eine erneute Arretierung erfolgt.

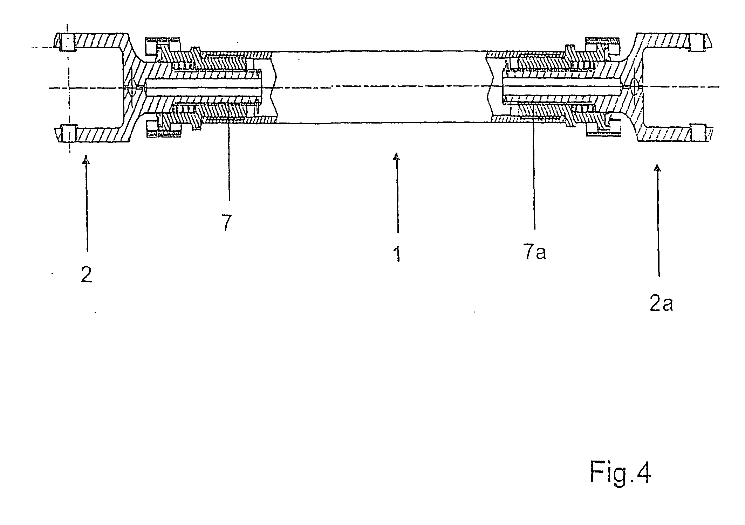

Im allgemeinen sind an den einander gegenüberliegenden Enden des Körpers 1 zwei Adapter 2, 2a angebracht, wie dies in Fig. 4 dargestellt ist. Zusätzlich sind die Gewindeanordnungen 7, 7a dargestellt. Der Einbau einer derartigen Zug-Druck-Stange geschieht dann folgendermaßen:
Im ersten Schritt wird der erste Adapter 2 an einer umgebenden Konstruktion befestigt, und mit einem zweiten Schritt wird dann die Einstellung bzw. Anpassung der Länge der Zug-Druck-Stange entsprechend dem Abstand der Montagepunkte vorgenommen. Dies erfolgt durch Drehen des Körpers 1. Mit einem dritten Schritt wird dann der zweite Adapter 2a mit den entsprechenden Montagepunkten verbunden. Die Zug-Druck-Stange ist damit schnell und einfach montiert, ohne dass zusätzliche Arretierungsvorgänge nötig sind.

### Bezugszeichenliste

- 1: Körper
- 2, 2a: Adapter
- 3: Bohrung
- 4: Rasteinrichtung
- 5: Einsatzelement
- 6: Schaft
- 7, 7a: Gewindeanordnung
- 8: Federelement
- 9: Drehachse
- 10: erstes Rastelement
- 11: zweites Rastelement
- 12: Rastnase
- 13: Verbindungselement
- 14: Bolzen

## Patentansprüche

1. Zug-Druck-Stange mit einem Körper (1) und mindestens einem Adapter (2) zur Montage der Zug-Druck-Stange, wobei der Adapter (2) zur Längenveränderung der Zug-Druck-Stange mit dem Körper (1) durch eine Gewindeanordnung (7) so verbunden ist, dass er im Verhältnis zum Körper drehbar ist, sowie einer mittels eines Bolzens und eines Verbindungselements (13) mit dem Adapter (2) verbundenen Rasteinrichtung (4), die die Drehbewegung derart beaufschlagt, dass sie mit einer vorbestimmbaren Verriegelungskraft in einer Mehrzahl von Drehstellungen arretiert und wieder entriegelt werden kann, wobei die Rasteinrichtung (4) aus zwei Rastelementen (10, 11) besteht, von denen das erste Rastelement (10) am Adapter (2) und das zweite Rastelement (11) am Körper (1) angeordnet ist, wobei das erste Rastelement (10) als Teilring mit mindestens einer Rastnase (12) ausgebildet ist, mit der es zur Arretierung der Rasteinrichtung (4) in das zweite Rastelement (11) eingreift, das als Zahnkranz ausgebildet ist, wobei der Teilring (10) den Zahnkranz (11) zu drei viertel mit einer ausreichenden Kraftausübung federnd so umfasst, dass der Körper (1) und der Adapter (2) in Drehrichtung zueinander arretier- und lösbar verbunden sind.

2. Zug-Druck-Stange nach Anspruch 1 mit einem koaxial zur Drehachse (9) des Körpers (1) und um einen Schaft des Adapters (2) angebrachten Torsionsfederelement, welches ein erstes Gewinde gegen ein zweites Gewinde der Gewindeanordnung (7) drückt, **dadurch gekennzeichnet, dass** sich an den Enden des Körpers (1) jeweils ein erster bzw. zweiter Adapter (2, 2a) zur Montage der Zug-Druck-Stange zwischen zwei Montagepunkten befindet, wobei die Adapter (2, 2a) über entgegen gesetzte Gewindcanordnungen (7, 7a) in der Weise mit dem Körper (1) verbunden sind, dass durch Drehen des Körpers 1) gegenüber den Adaptern (2, 2a) die Länge der Zug-Druck-Stange leichtgängig veränderbar und wieder arretierbar ist.

## Claims

1. Draw-pull bar with a body (1) and at least one adapter (2) to be fitted to the draw-pull bar whereby the adapter (2) is connected to the body (1) by means of a threaded arrangement (7) for a length variation of the draw-pull bar in such a way that it can be turned relative to the body as well as with a detent mechanism connected with the adapter (2) by means of a bolt and a connecting element, which load the rotary movement to such an extent that it can be locked and unlocked again in a multitude of rotary positions by means of a pre-determinable locking force, whereby the detent mechanism (4) consists of two locking elements (10, 11), of which the first locking element (10) is fitted to the adapter (2) and the second locking element (11) is attached to the body (1), whereby the first locking element (19) is made as a partial ring with at least one locking nose (12), with which it locks into the second locking element (11) for arresting the detent mechanism (4), which in turn ins made as a toothed rim, whereby the partial ring (10) surrounds the toothed rim (11) three thirds with a suitable spring force so that the body (1) and the adapter (2) are connected in lockable and releasable turning direction.

2. Draw-pull bar as set forth in claim 1 **characterised in that** the torsion-type suspension element attached coaxially to the rotational axis (9) of the body (1) and to a shaft of the adapter (2), which presses a first thread to a second thread of the threaded arrangement (1), **characterised in that** the ends of the body (1) contain each a first and/or second adapter (2, 2a) to fit the draw-pull bar between two mounting points, whereby the adapter (2, 2a) are connected to the body (1) by opposing threaded arrangements (7, 7a) in such a way that by turning the body (1) relative to the adapters (2, 2a) the length of the draw-pull bar can be varied smoothly and can be arrested again.

## Revendications

1. Barre de traction-pression avec un corps (1) et au moins un adaptateur (2) pour le montage de la barre de traction-pression, l'adaptateur (2) pour la modification de la longueur de la barre de traction-pression étant connecté avec le corps (1) par une disposition de filetage (7) telle qu'il peut être pivoté par rapport au corps ainsi qu'au moyen d'un boulon et d'un élément de connexion (13) avec le dispositif d'enclenchement (4) connecté à l'adaptateur (2) qui met le mouvement rotatif tellement sous pression qu'il peut être bloqué et de nouveau déverrouillé dans un grand nombre de positions de rotation avec une force de verrouillage définissable au préalable, le dispositif d'enclenchement (4) étant composé de deux éléments d'enclenchement (10, 11), dont le premier élément d'enclenchement (10) est disposé sur l'adaptateur (2) et le second élément d'enclenchement (11) est disposé sur le corps (1), le premier élément d'enclenchement étant formé comme bague partielle avec au moins un ergot d'arrêt (12) avec lequel il pénètre dans le second élément d'arrêt (12), qui est formé comme une couronne dentée, pour le blocage du dispositif d'enclenchement (4), la bague partielle (10) englobant la couronne dentée (11) aux trois quarts en exerçant une force suffisante avec amortissement de telle manière que le corps (1) et l'adaptateur (2) sont connectés blocables et détachables l'un par rapport à l'autre dans le sens de rotation.

2. Barre de traction-pression selon la revendication 1 avec un coaxial orienté vers l'axe rotatif (9) du corps (1) et un élément d'amortissement de torsion apportés sur une tige de l'adaptateur (2) entre deux points de montage qui appuie un premier filetage contre un second filetage de la disposition de filetage (7), identifié par le fait qu'il se trouve aux extrémités du corps (1) respectivement un premier et un second adaptateur (2, 2a) pour le montage de la barre de traction-pression entre deux points de montage, les adaptateurs (2, 2a) étant connectés avec le corps (1) au moyen de dispositions de filetage disposées de manière opposée (7, 7a) de telle manière que la longueur de la barre de traction-pression puisse être modifiée facilement et soit de nouveau blocable en tournant le corps (1) par rapport aux adaptateurs (2, 2a).
